# FASCICULE DE BREVET EUROPEEN

(11) **EP 2 552 601 B1**
(45) Date de publication et mention de la délivrance du brevet: **20.05.2015**
(21) Numéro de dépôt: 11720316.6
(22) Date de dépôt: 01.04.2011
(51) Int. Cl.: B05C 7/02, B05D 7/22, B28B 19/00, B29C 47/10, F16L 9/04, F16L 57/06, F16L 58/06, B28C 5/14, B28C 7/16, B28C 5/00, B05C 11/00, B01F 7/08, B05B 13/06

(54) **INSTALLATION DE REVÊTEMENT INTÉRIEUR D'UN ÉLÉMENT DE CANALISATION ET UTILISATION CORRESPONDANTE**
ANLAGE ZUR AUSKLEIDUNG DER INNENSEITE EINES ROHRELEMENTS UND ENTSPRECHENDE VERWENDUNG
FACILITY FOR COATING THE INSIDE OF A PIPE ELEMENT AND CORRESPONDING USE

(30) Priorité: 02.04.2010 FR 1052511; 02.04.2010 FR 1052510
(43) Date de publication de la demande: 06.02.2013
(73) Titulaire: Saint-Gobain PAM, 21 Avenue Camille Cavallier 54700 Pont-à-Mousson (FR)
(72) Inventeur: LAGES, Victoria, F-54700 Pont A Mousson (FR); MONNIN, Yann, F-93500 Pantin (FR); DE SOUSA, José, F-54700 Norroy Lès Pont A Mousson (FR); GARRANT, Jean, F-54700 Maidières (FR)
(74) Mandataire: Blot, Philippe Robert Emile
(86) Numéro de dépôt international: PCT/FR2011/050738
(87) Numéro de publication internationale: WO 2011/121253

(56) Documents cités:
- FR-A1- 2 414 952
- FR-A1- 2 500 785
- FR-A1- 2 707 204
- JP-U- H0 426 300
- US-A- 4 232 973

## Description

La présente invention concerne une installation selon le préambule de la revendication 1. Une telle installation est connue de FR2500785.

On connaît dans l'état de la technique des tuyaux de transport d'eaux usées.

Ces tuyaux comprennent un corps de base en métal sur la surface intérieure duquel est appliqué un revêtement intérieur apte à résister à des eaux ayant un pH compris entre 4 et 13. Les revêtements généralement utilisés comprennent un mortier de ciment.

Une installation pour fabriquer un tel tuyau est décrite dans le document WO95/01830. L'installation comprend un tube à l'intérieur duquel les matières sèches, constituées de ciment et d'une charge minérale (sable), sont mélangées. Un élément tubulaire permet d'introduire de l'eau dans le tube et un ressort hélicoïdal mélange les matières sèches et l'eau en formant un mortier. Un déflecteur de projection est placé à l'extrémité du ressort hélicoïdal et distribue le mortier su la surface intérieure du tuyau. Une installation de mélange est décrite dans US4232973 ou FR 2414952.

L'invention a pour but de proposer une installation qui permette d'améliorer le mélange des composants du mortier et qui permette une application contrôlée du mortier sur la surface intérieure du corps de base d'un élément de canalisation tel qu'un tuyau ou un raccord.

A cet effet, l'invention a pour objet une installation du type précité, caractérisée en ce qu'elle comporte les caractéristiques de la revendication1.

Selon des modes de réalisation particuliers, l'installation selon l'invention comporte l'une ou plusieurs des caractéristiques des revendications dépendantes 2 à 12.

L'invention a en outre pour objet une utilisation d'une telle installation selon les caractéristiques de la revendication 13.

L'invention sera mieux comprise à la lecture de la description qui va suivre, donnée uniquement à titre d'exemple et faite en se référant aux dessins annexés, sur lesquels :
- la Figure 1 est une vue en coupe longitudinale d'un tuyau fabriqué par une installation selon l'invention;
- la Figure 2 est une vue schématique d'une installation de revêtement d'un tuyau selon l'invention ;

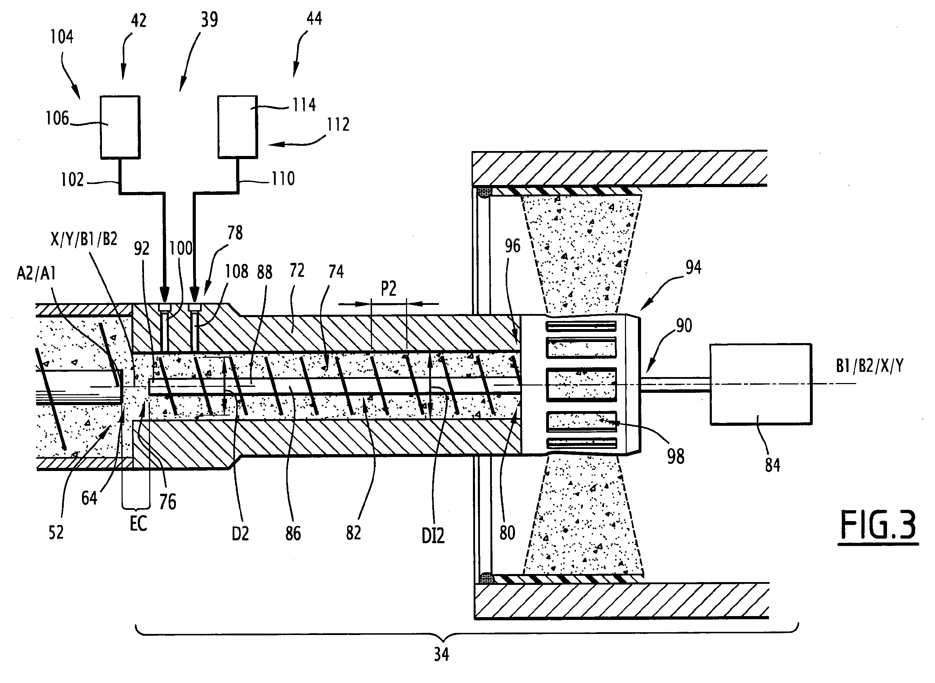

- La Figure 3 est une vue agrandie du détail III de la Figure 2 ;
- la Figure 4 est une vue axiale de la tête de projection de l'installation de la Figure 2 ;
- la Figure 5 est une vue en coupe transversale de la tête de projection de la Figure 4 ;
- la Figure 6 est une vue développée de la surface enveloppante de la tête de projection de la Figure 5 ;
- la Figure 7 est une vue analogue à celle de la Figure 6, à savoir une vue développée de la surface enveloppante de la tête de projection selon un deuxième mode de réalisation;
- les Figures 8 et 9 sont des vues analogues à celles des Figures 5 et 6 d'un troisième mode de réalisation de la tête de projection ; et
- les Figures 10 et 11 sont des vues analogues à celles des Figures 5 et 6 d'un quatrième mode de réalisation de la tête de projection.

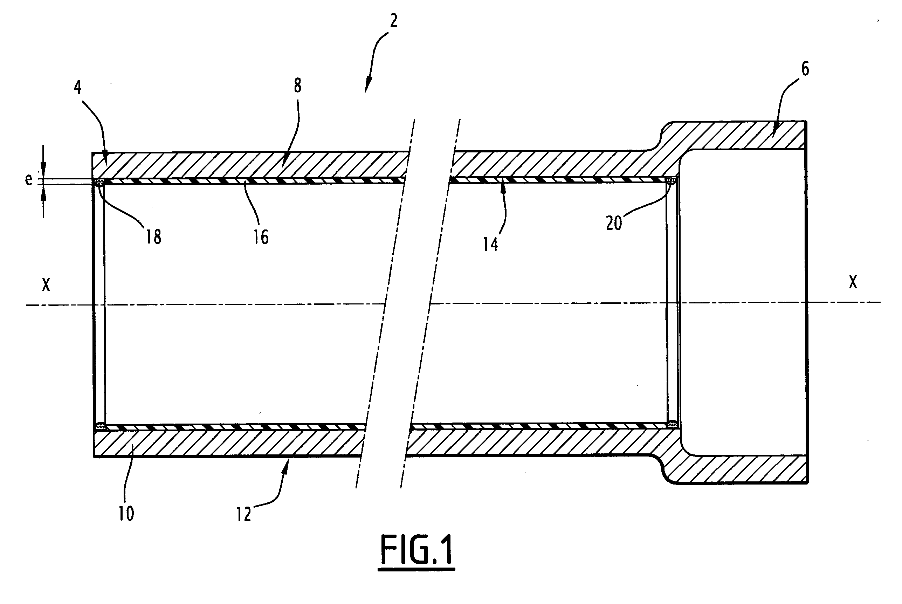

Sur la Figure 1 est représenté un tuyau pouvant être fabriqué par l'installation selon l'invention, désigné par la référence générale 2.

Ce tuyau 2 s'étend selon un axe central X-X. Dans ce qui suit et sauf indication contraire, les termes « axialement », « radialement » et « circonférentiellement » seront utilisés par rapport à l'axe central X-X.

Le tuyau 2 comporte un bout uni 4, un bout à emboîtement 6 et une partie intermédiaire 8 s'étendant entre le bout uni 4 et le bout à emboîtement 6.

Le tuyau 2 est muni d'un corps de base 10, fabriqué par exemple en fonte, et notamment en fonte à graphite sphéroïdal. Ce corps de base 10 définit une surface extérieure 12 de corps de base et une surface intérieure 14 de corps de base.

La surface extérieure 12 est revêtue d'un revêtement extérieur anticorrosion non représenté, par exemple à base de zinc.

Le tuyau 2 comporte en outre un revêtement intérieur 16 appliqué sur la surface intérieure 14 de la partie intermédiaire 8 et du bout uni 4. Le bout à emboîtement 6 est dépourvu du revêtement intérieur 16.

Le revêtement intérieur 16 a de préférence une épaisseur de paroi e comprise entre 2 mm et 10 mm, notamment sur toute son étendue.

Le revêtement intérieur 16 est en une matière permettant au tuyau 2 de transporter des eaux usées ayant un pH qui est compris entre 4 et 13 et qui peut ponctuellement être inférieur à 4.

A cet effet, le revêtement intérieur 16 comprend un mortier et est notamment constitué de ce mortier.

Le tuyau 2 comprend en outre une première 18 butée et une seconde 20 butée qui, lors de l'application du mortier à l'état liquide ou visqueux sur la surface intérieure 14 du corps de base du tuyau 2, s'opposent à l'écoulement du mortier en dehors des parties à revêtir.

Le mortier du revêtement intérieur 16 a une composition spécifique afin d'être facile à appliquer tout en résistant à des effluents agressifs. Le mortier est soit un mortier hydraulique, éventuellement renforcé par au moins un adjuvant et/ou polymère et/ou par des fibres de.renforcement, soit un mortier de résine avec ajout éventuel d'au moins un adjuvant et/ou de fibres de renforcement.

Le mortier est obtenu à partir d'un mélange de matières sèches et de matières liquides.

Les matières sèches comprennent au moins un premier composant sec et, au moins dans le cas d'un mortier hydraulique, un deuxième composant sec. En variante, les matières sèches comprennent au moins un troisième composant sec.

Les matières liquides comprennent au moins un premier composant liquide et, au moins dans le cas d'un mortier de résine, un deuxième composant liquide. En variante, elles peuvent comprendre des composants liquides additionnels.

Dans le cas d'un mortier hydraulique, le premier composant sec est une charge minérale, par exemple un sable concassé ou roulé. De préférence, la charge minérale est un sable siliceux, silico-calcaire ou un laitier. La granulométrie du sable est inférieure à 4mm.

Le deuxième composant sec est un liant hydraulique, notamment, un ciment de hauts-fourneaux, un ciment alumineux ou un ciment comprenant un polymère.

Le troisième composant sec peut être un adjuvant de type superplastifiant, colorant, retardateur de prise, rétenteur d'eau ou accélérateur de prise.

Dans le cas d'un mortier hydraulique, le premier composant liquide est de l'eau. Avantageusement, les matières liquides du mortier hydraulique comprennent un deuxième composant liquide qui peut être un adjuvant liquide de type superplastifiant, colorant, retardateur de prise, rétenteur d'eau ou accélérateur de prise.

Egalement, dans le cas d'un mortier hydraulique, le deuxième composant liquide peut être un polymère, tel que du latex en phase aqueuse, ou un époxyde. Dans ce dernier cas, un durcisseur formant un troisième composant liquide est également utilisé, et l'époxyde et le durcisseur sont alors introduits séparément dans les matières sèches.

Dans le cas d'un mortier hydraulique, le rapport massique entre le premier composant sec, à savoir le sable, et le deuxième composant sec, à savoir le ciment, est compris entre 2 et 3.

Le rapport massique entre le premier composant liquide, à savoir l'eau, et le deuxième composant sec, à savoir le ciment, est inférieur à 0,45.

Le mortier hydraulique selon l'invention peut également comprendre des fibres de renforcement de type organiques, minérales ou métalliques, et ce dans une proportion en poids comprise entre 0,5% et 5% du poids du liant hydraulique. De manière préférentielle, les fibres de renforcement sont alors mélangées à la charge minérale formant le premier composant sec préalablement au mélange de celle-ci avec les autres matières sèches.

Dans le cas d'un mortier de résine, celui-ci est obtenu en mélangeant une charge minérale sèche et un liant organique. Les matières sèches sont donc constituées de la charge minérale sèche. Celle-ci comprend au moins un premier composant sec, par exemple un sable concassé ou roulé. De préférence, le premier composant sec est un sable siliceux, silico-calcaire ou un laitier, la granulométrie du sable étant inférieure à 4mm. De préférence, la granulométrie du premier composant sec est comprise entre 10 µm et 1 mm. En particulier, la charge minérale peut être constituée du premier composant sec.

Avantageusement, la charge minérale sèche comprend un second composant sec, constitué par exemple d'un sable siliceux ou silico-calcaire. En particulier, la charge minérale sèche est constituée de ces deux composants secs.

Avantageusement, ces deux composants secs ont des granulométries différentes. De préférence, le premier composant sec a une granulométrie inférieure à 4 mm, et le second composant sec a une granulométrie inférieure à 0,4 mm. Le terme granulométrie est utilisé en application de la norme française XP P 18-545. Le second composant sec est donc un sable plus fin que le sable constituant le premier composant sec.

Par ailleurs, le premier composant sec constitue entre 60% et 90% en poids de la charge minérale sèche, tandis que le second composant sec constitue entre 40% et 10% en poids de la charge minérale sèche.

Le liant organique du mortier de résine comprend avantageusement une résine polyépoxyde, ou est constitué d'une telle résine polyépoxyde. Cette résine polyépoxyde est constituée d'un sous-composant époxyde constituant le premier composant liquide, et d'un sous-composant durcisseur constituant le second composant liquide. Avantageusement, le sous-composant époxyde et le sous-composant durcisseur ont un rapport en poids qui est compris entre 100/30 et 100/60, et de préférence entre 100/40 et 100/55.

Alternativement, le liant organique comprend une résine polyuréthane, ou est constitué d'une telle résine polyuréthane, qui est constituée d'un sous-composant polyol formant le premier composant liquide, et d'un sous-composant isocyanate formant le second composant liquide.

Avantageusement, le rapport en poids entre la charge minérale et le liant organique est soit compris entre 4/1 et 7,5/1, soit entre 1,5/1 et 4/1 et de préférence entre 2/1 et 3/1.

En variante, les matières liquides pour le mortier de résine peuvent comprendre un ou plusieurs composants liquides additionnels de type colorant, diluant ou autre.

Le mortier de résine selon l'invention peut également comprendre des fibres de renforcement de type organiques, minérales ou métalliques, et ce dans une proportion en poids comprise entre 0,5% et 10% du poids du liant organique. Les fibres de renforcement sont alors mélangées à la charge minérale sèche préalablement au mélange de celle-ci avec le liant organique.

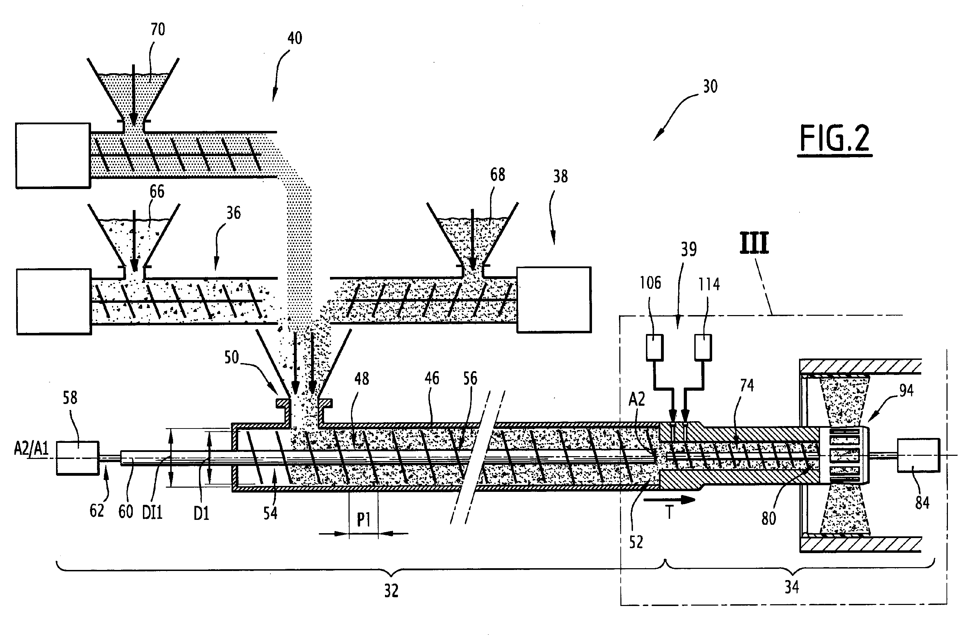

Sur la figure 2 est représentée schématiquement une installation 30 adaptée pour appliquer le revêtement intérieur 16 sur le corps de base 10 d'un tuyau 2 tel que décrit ci-dessus.

L'installation 30 comprend un dispositif d'acheminement 32 adapté pour acheminer les matières sèches. L'installation 30 comprend en outre un dispositif de mélange et de projection 34. Par ailleurs, l'installation 30 est munie d'un premier dispositif d'introduction de matière sèche 36, d'un deuxième dispositif d'introduction de matière sèche 38 et d'un troisième dispositif d'introduction de matière sèche 40. L'installation 30 est en outre munie d'un dispositif de fourniture de matières liquides 39. Ce dispositif de fourniture de matières liquides 39 comprend un premier dispositif d'introduction de matière liquide 42 et un deuxième dispositif d'introduction de matière liquide 44.

Le dispositif d'acheminement 32 est adapté pour acheminer les matières sèches et est muni d'un carter 46 formant une chambre d'acheminement 48. La chambre d'acheminement 48 est munie d'une entrée des matières sèches 50 et d'une sortie des matières sèches 52. Le dispositif d'acheminement 32 comprend en outre un organe d'acheminement 54 des matières sèches. En l'occurrence, le dispositif d'acheminement 32 est un convoyeur à vis, l'organe d'acheminement étant une vis 56 disposée dans la chambre d'acheminement 48. Le dispositif d'acheminement 32 constitue également un dispositif de mélange adapté pour mélanger le premier composant sec et le deuxième composant sec, et éventuellement le troisième composant sec.

Le premier dispositif d'introduction de matière sèche 36 est adapté pour introduire le premier composant sec dans l'entrée des matières sèches 50. Le deuxième dispositif d'introduction de matière sèche 38 est adapté pour introduire le deuxième composant sec dans l'entrée des matières sèches 50. Le troisième dispositif d'introduction de matière sèche 40 est adapté pour introduire le troisième composant sec dans l'entrée des matières sèches 50.

La chambre d'acheminement 48 est cylindrique à section circulaire ayant un axe A1 de chambre d'acheminement et a un diamètre intérieur D11. La chambre d'acheminement 48 a donc une section transversale donnée.

Le dispositif d'acheminement 32 comporte un moteur d'entraînement 58 adapté pour entraîner l'organe d'acheminement 54.

La vis 56 comporte un arbre central 60 s'étendant selon un axe d'arbre A2. La vis 56 comporte un pas de vis P1 donné et a un diamètre extérieur D1. La vis 56 a un côté entraînement 62 associé au moteur d'entraînement 58 et un côté libre 64, opposé au côté entraînement 62.

Le premier dispositif d'introduction de matière sèche 36 est un doseur à vis et comporte un réservoir d'entrée 66 contenant le premier composant sec. Le deuxième dispositif d'introduction de matière sèche 38 est un doseur à vis, et comporte un réservoir d'entrée 68 contenant le deuxième composant sec. Le troisième dispositif d'introduction de matière sèche 40 est un doseur à vis et comporte un réservoir d'entrée 70 contenant le troisième composant sec.

Le dispositif de mélange et de projection 34 est adapté pour mélanger les composants secs et les composants liquides. Le dispositif de mélange et de projection 34 est muni d'un carter 72 formant une chambre de mélange 74. La chambre de mélange 74 comporte une entrée des matières sèches 76, une entrée des matières liquides 78, et une sortie de mortier 80. L'entrée des matières sèches 76 est disposée en aval de la sortie des matières sèches 52 de la chambre d'acheminement 48 et cette sortie des matières sèches 52 débouche dans l'entrée des matières sèches 76 de la chambre de mélange 74. L'entrée des matières liquides 78 est raccordée au dispositif de fourniture de matières liquides 39 et est disposée à proximité et en aval de l'entrée des matières sèches 76 dans la chambre de mélange 74.

Le dispositif de mélange et de projection 34 est également muni d'un organe de mélange 82 disposé dans la chambre de mélange 74.

La chambre de mélange 74 est cylindrique à section circulaire ayant un axe B1 de chambre de mélange et a un diamètre intérieur DI2. La chambre de mélange 74 a donc une section transversale donnée.

Le dispositif de mélange et de projection 34 comporte un moteur d'entraînement 84 adapté pour entraîner l'organe de mélange 82.

L'organe de mélange est une vis 86. La vis 86 comporte un arbre central 88 s'étendant selon un axe d'arbre B2. La vis 86 comporte un pas de vis P2 donné et a un diamètre extérieur D2. La vis 86 a un côté entraînement 90 associé au moteur d'entraînement 84 et un côté libre 92, opposé au côté entraînement 90.

L'organe d'acheminement 54 est dissocié de l'organe de mélange 82.

Le pas de vis P1 est différent du pas de vis P2. De préférence le pas de vis P1 est supérieur au pas de vis P2.

Le diamètre extérieur D2 est différent du diamètre extérieur D1. En l'occurrence, le diamètre D1 est supérieur au diamètre D2.

De plus, les vis 56, 86 sont axialement dissociées et ne se chevauchent pas.

Aussi, les côtés libres 64, 92 des deux vis sont adjacents l'un de l'autre.

Plus précisément, les vis 56, 86 sont axialement espacées l'une de l'autre en formant un écart axial EC. L'écart axial est mesuré selon les axes A2 et B2.

La chambre d'acheminement 48 et la chambre de mélange 74 sont disposées coaxialement. En d'autres termes, l'axe central B1 de la chambre de mélange 74 est coaxial à l'axe central A1 de la chambre d'acheminement 48.

Le diamètre intérieur DI1 est supérieur au diamètre intérieur DI2. La section transversale de la chambre d'acheminement 48 est donc supérieure à la section transversale de la chambre de mélange 74.

Le dispositif de mélange et de projection 34 comporte une tête de projection 94 adaptée pour projeter le mortier sur la surface intérieure du tuyau. La tête de projection 94 comporte une entrée de tête 96 et au moins une fenêtre de projection 98. La sortie de mortier 80 de la chambre de mélange 74 débouche dans l'entrée de tête 96.

Le dispositif de mélange et de projection 34 définit un axe central Y-Y, qui est l'axe central de la chambre de mélange 74. Le dispositif de mélange et de projection 34 définit également un sens de transport T dirigé parallèlement à l'axe Y-Y et dirigé de l'entrée des matières sèches 76 vers la tête de projection 94.

Le dispositif de mélange et de projection 34 est muni de moyens d'entraînement en rotation de la tête de projection 94 par rapport au carter 72. D'une manière préférentielle, la tête de projection 94 et l'organe de mélange 82 sont solidaires en rotation. Ainsi, la tête de projection 94 et l'organe de mélange 82 sont entraînés par le même moteur d'entraînement 84.

Le premier dispositif d'introduction de matière liquide 42 est adapté pour introduire le premier composant liquide dans les matières sèches.

Le premier dispositif d'introduction de matière liquide 42 comporte un canal d'introduction 100 débouchant dans la chambre de mélange 74 au niveau de l'entrée des matières liquides 78. Le canal d'introduction 100 débouche dans la chambre de mélange 74 à un emplacement qui est situé en aval de l'entrée des matières sèche 76, en considérant le sens de transport T. Ce canal d'introduction 100 traverse la paroi du carter 72 et est, de préférence, disposé radialement par rapport à l'axe central Y-Y, de telle sorte que le premier composant liquide est introduit radialement et perpendiculairement dans la chambre de mélange 74.

Le premier dispositif d'introduction de matière liquide 42 comporte par ailleurs une conduite 102 et un dispositif doseur 104. Le dispositif doseur 104 est relié par la conduite 102 au canal d'introduction 100. Aussi, le dispositif doseur 104 comporte un réservoir 106 contenant le premier composant liquide.

Le deuxième dispositif d'introduction de matière liquide 44 est adapté pour introduire le deuxième composant liquide dans les matières sèches.

Le deuxième dispositif d'introduction de matière liquide 44 comporte un canal d'introduction 108 débouchant dans la chambre de mélange 74. Le canal d'introduction 108 débouche dans la chambre de mélange 74 au niveau de l'entrée des matières liquides 78 à un emplacement qui est situé en aval de l'emplacement où le canal d'introduction 100 du premier composant liquide débouche dans la chambre de mélange 74, en considérant le sens de transport T. Ce canal d'introduction 108 traverse la paroi du carter 72 et est, de préférence, disposé radialement par rapport à l'axe central Y-Y, de telle sorte que le deuxième composant liquide est introduit radialement et perpendiculairement dans la chambre de mélange 74.

Le deuxième dispositif d'introduction de matière liquide 44 comporte en outre une conduite 110 et un dispositif doseur 112. Le dispositif doseur 112 est relié par la conduite 110 au canal d'introduction 108. Aussi, le dispositif doseur 112 comporte un réservoir 114 contenant le second composant liquide.

Le canal d'introduction 100 et la conduite 102 sont séparés sur toute leur longueur du canal d'introduction 108 et de la conduite 110.

D'une manière générale, les dispositifs d'introduction de matière liquide 42, 44, sont adaptés pour introduire les deux composants liquides séparément l'un de l'autre dans la chambre de mélange 74. A cet effet, le canal d'introduction 100 débouche dans la chambre de mélange 74 espacé du canal d'introduction 108.

Le mélange des composants liquides et des composants secs est donc effectué exclusivement dans la chambre de mélange 74 et non pas en amont de celle-ci. En conséquence, seule la chambre de mélange 74 doit être nettoyée lorsque l'installation 30 est mise à l'arrêt, ce qui limite les pertes de matières.

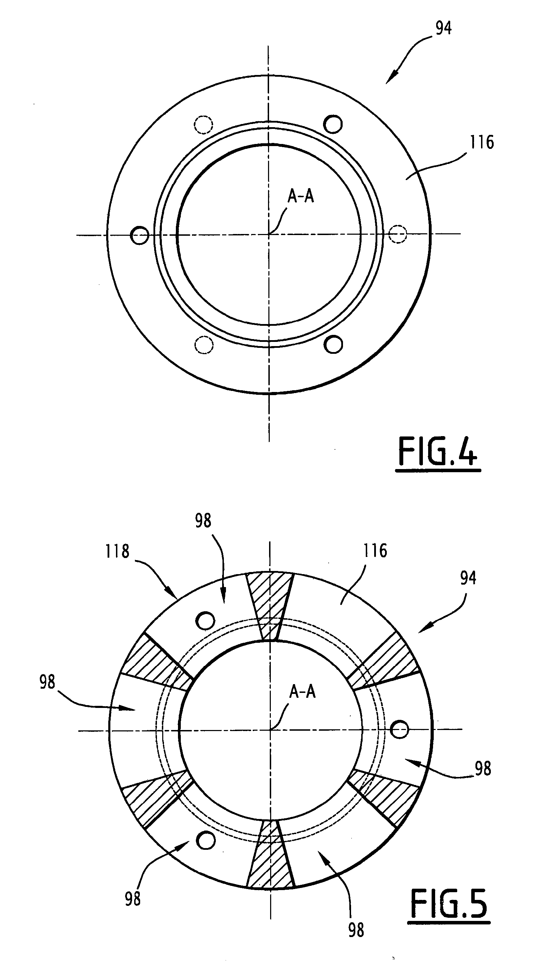

Afin que le mortier puisse être appliqué d'une manière satisfaisante sur la surface intérieure du tuyau, la tête de projection 94 a une conception particulière. Les figures 4 et 5 montrent un mode de réalisation de cette tête 94.

Comme ceci est visible sur les figures 4 et 5, la tête de projection 94 comprend un corps de base 116. Le corps de base 116 est par exemple en forme de cylindre creux et s'étend selon un axe central de tête A-A. Le corps de base 116 a une surface d'enveloppe 118. La tête de projection 94 comporte une multitude des fenêtres de projection 98 ménagées dans le corps de base 116. Dans le cas présent, la tête de projection 96 comporte six fenêtres de projection 98. Chaque fenêtre de projection 98 est une ouverture radialement traversante du corps de base 116 par rapport à l'axe central de tête A-A.

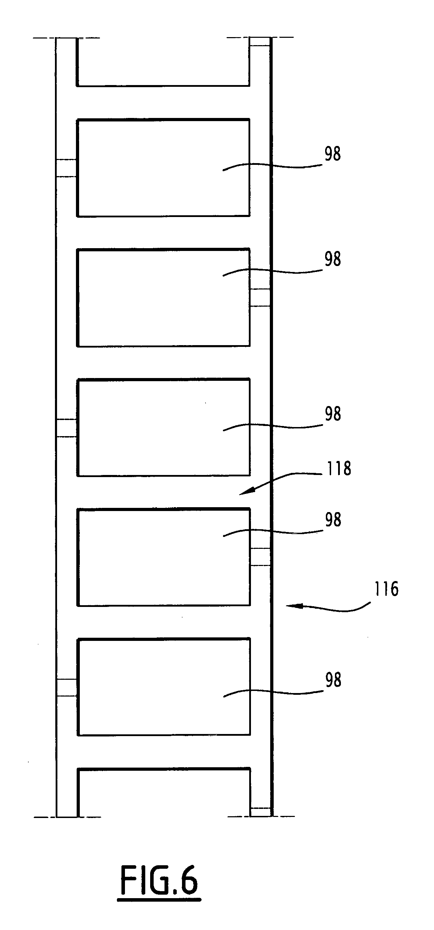

La figure 6 montre la surface d'enveloppe 118 déroulée sur le plan de la figure 6. Chaque fenêtre de projection 98 a une forme sensiblement rectangulaire. En variante, chaque fenêtre de projection 98 a une forme sensiblement triangulaire.

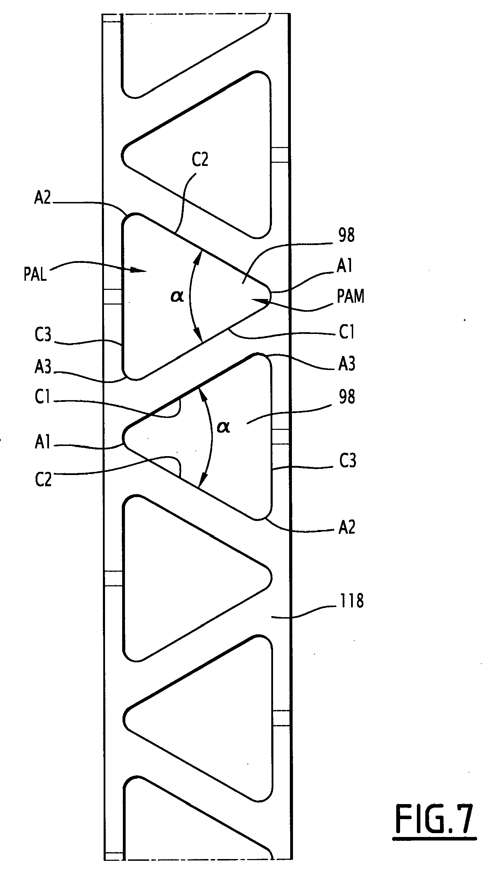

La figure 7 montre la surface d'enveloppe 118, déroulée sur le plan de la figure 7, d'une tête de projection 94 selon un deuxième mode de réalisation, la tête de projection comportant six fenêtres de projection 98. Chaque fenêtre de projection 98 a une forme sensiblement triangulaire à coins arrondis. Chaque fenêtre de projection 98 a trois côtés, C1, C2, C3. A chaque fois, deux côtés C1-C2, C2-C3 et C3-C1 sont reliés par une partie en arc de cercle A1, A2, A3. Chaque fenêtre de projection 98 comporte une portion axiale large PAL et une portion axiale mince PAM. La portion axiale large PAL est, par rapport à l'axe A-A, circonférentiellement plus large que la portion axiale mince PAM.

Les fenêtres de projection 98 sont disposées autour de l'axe central A-A de telle sorte que les portions axiales larges PAL et les portions axiales minces PAM alternent selon la direction circonférentielle autour de l'axe central de tête A-A.

Chaque fenêtre de projection 98 forme donc une base, constituée par la portion axiale large PAL, et un sommet, constitué par la portion axiale mince PAM. Les côtés C1, C2 associés au sommet forment un angle de sommet α entre eux. Cet angle α est compris entre 5° et 60°. Dans l'exemple montré sur la figure 7, l'angle de sommet α est de 60°, et les fenêtres de projection 98 ont une forme de triangle équilatéral.

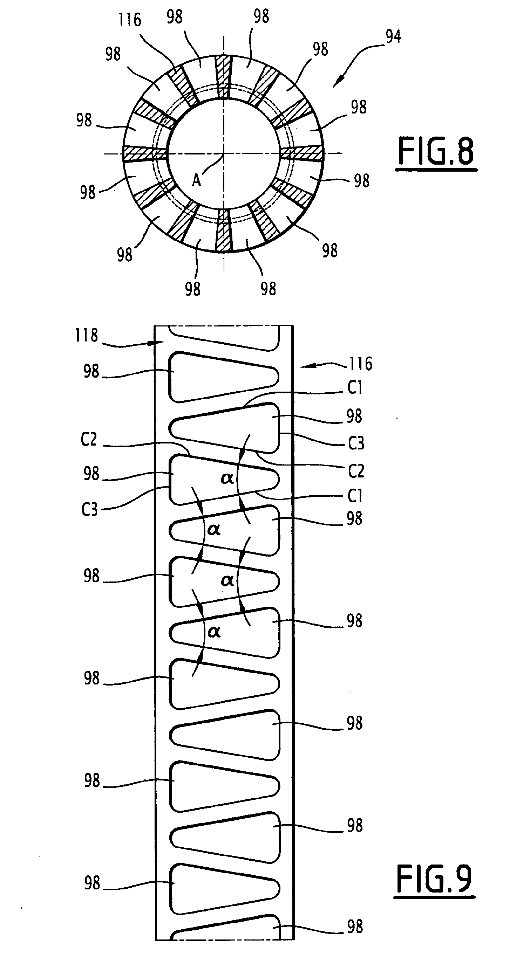

Les figures 8 et 9 montrent un troisième mode de réalisation d'une tête de projection 94. La différence par rapport au deuxième mode de réalisation est le nombre des fenêtres de projection 98, qui sont dans ce cas douze. De plus, l'angle de sommet α est de 20° et les fenêtres de projection 98 ont une forme générale de triangle isocèle.

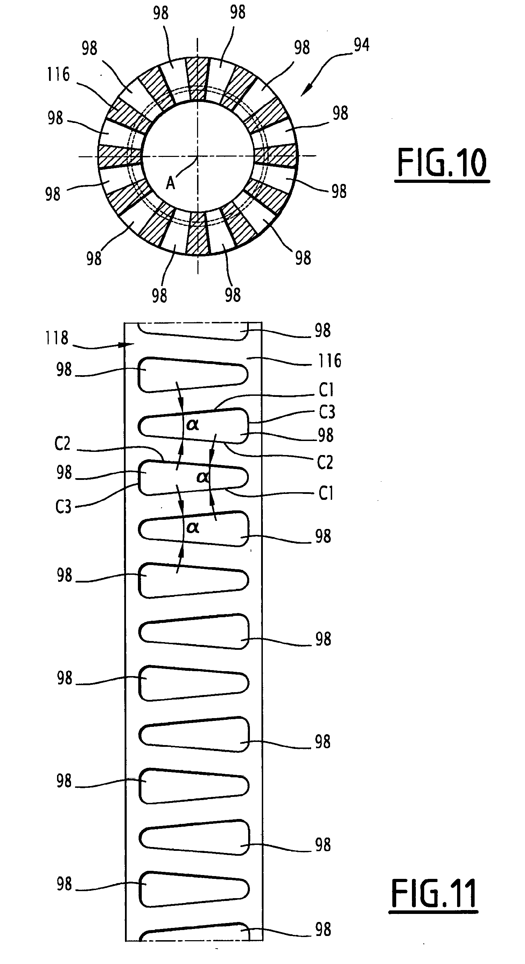

Les figures. 10 et 11 montrent un quatrième mode de réalisation d'une tête de projection 94. La seule différence par rapport au troisième mode de réalisation est l'angle de sommet α qui est ici de 10°.

De manière générale, les fenêtres de projection 98 ont au moins deux côtés non parallèles. En variante, chaque fenêtre de projection 98 peut également avoir une forme générale quadrilatère, par exemple de trapèze.

Par la suite sera décrit un procédé d'application d'un revêtement intérieur 16 sur le corps de base 10 d'un tuyau selon l'invention en utilisant l'installation 30 de la figure 2.

Pendant une première étape, le premier composant sec et le deuxième composant sec sont introduits séparément dans l'entrée des matières sèches 50 de la chambre d'acheminement 48. Les deux composants secs sont mélangés et acheminés par le dispositif d'acheminement 32 vers la sortie des matières sèches 52. Ainsi, un mélange sec homogène est obtenu au niveau de la sortie 52. Eventuellement, le troisième dispositif d'introduction de matière sèche introduit un autre composant sec dans l'entrée des matières sèches 50.

Les matières sèches sont ensuite introduites dans l'entrée des matières sèches 76 du dispositif de mélange et de projection 34 et sont acheminées par la vis 86 selon le sens de transport T, la vis 86 et la tête de projection 94 étant entraînées en rotation simultanément et d'une manière synchrone par le moteur d'entraînement 84.

Pendant une deuxième étape, le premier composant liquide et, le cas échéant, le deuxième composant liquide sont introduits radialement et perpendiculairement par rapport au sens de transport T dans l'entrée des matières liquides 78 et ainsi dans les matières sèches, à l'intérieur de la chambre de mélange 74. Cette introduction du premier composant liquide dans les matières sèches est effectuée séparément de l'introduction du second composant liquide dans les matières sèches. En variante, l'introduction est effectuée selon une direction ayant une composante radiale ou perpendiculaire au sens de transport T, mais n'est pas strictement radiale ou perpendiculaire. Dans ce cas, les canaux 100 et 108 sont inclinés par rapport au sens de transport T et à l'axe B1.

Pendant une troisième étape, les composants liquides et les composants secs sont mélangés par la vis 86 dans la chambre de mélange 74 et forment un mortier homogène qui est acheminé dans la tête de projection 94. La tête de projection 94 étant entraînée en rotation par le moteur 84, le mortier est alors projeté sur la surface intérieure du tuyau 2 à travers les fenêtres de projection 98.

Pendant la projection, le tuyau 2 est entraîné en rotation autour de son axe X-X suivant un sens de rotation identique à celui de la tête de projection mais à une vitesse de rotation inférieure à celle de la tête de projection, et la tête de projection 94 est déplacée axialement à l'intérieur et le long du tuyau 2.

Une fois que toute la partie de la surface intérieure 14 devant être revêtue est couverte par le mortier et tant que celui-ci est à l'état liquide ou visqueux, la vitesse de rotation du tuyau 2 autour se son axe X-X est augmentée afin de lisser la surface libre du revêtement 16 de mortier. L'accélération produite lors de l'élévation de la vitesse de rotation du tuyau est comprise entre 50 et 100 fois l'accélération normale de la pesanteur terrestre.

En variante, le dispositif de fourniture de matières liquides n'a qu'un seul dispositif d'introduction de composant liquide, par exemple dans le cas d'un mortier hydraulique sans adjuvant liquide.

En variante encore, l'installation 30 peut également être munie de dispositifs d'introduction de matière sèche additionnels si d'autres composants secs doivent être introduits dans la chambre d'acheminement 48 ; de préférence, l'installation 30 est munie, pour chaque composant sec, d'un dispositif d'introduction de matière sèche distinct adapté pour introduire le composant sec dans l'entrée des matières sèches 50.

De même, l'installation 30 peut également être munie de dispositifs d'introduction de matière liquide additionnels lorsque d'autres composants liquides doivent être introduits dans la chambre de mélange 74. De préférence l'installation 30 est munie d'autant de dispositifs d'introduction de matière liquide qu'il y a de composants liquides à introduire dans la chambre de mélange 74. D'une manière générale, les dispositifs d'introduction de matière liquide sont adaptés pour introduire les composants liquides séparément les uns des autres dans la chambre de mélange 74 et ont donc à cet effet des canaux d'introduction qui débouchent dans la chambre de mélange 74 à des emplacements espacés les uns des autres. De plus, chaque canal d'introduction d'un composant liquide débouche de préférence radialement dans la chambre de mélange 74.

Les caractéristiques de la tête de projection 42 décrites en se référant aux Figures 4 à 11 peuvent être utilisées individuellement ou en toute combinaison.

## Revendications

1. Installation adaptée pour le revêtement intérieur d'un élément de canalisation par un mortier, du type comprenant
- un dispositif d'acheminement (32) qui est adapté pour acheminer les matières sèches du mortier, le dispositif d'acheminement comprenant une chambre d'acheminement (48) et un organe d'acheminement (54) des matières sèches disposé dans la chambre d'acheminement, la chambre d'acheminement (48) étant munie d'une entrée des matières sèches (50) et d'une sortie des matières sèches (52),
- un dispositif de mélange (34) adapté pour mélanger les matières sèches avec des matières liquides afin d'obtenir le mortier, ce dispositif de mélange ayant un organe de mélange (82) et un carter (72) formant une chambre de mélange (74) des matières sèches avec les matières liquides, cette chambre de mélange ayant une entrée des matières sèches (76), une entrée des matières liquides (78) et une sortie de mortier (80),
la sortie des matières sèches (52) du dispositif d'acheminement (32) débouchant dans l'entrée des matières sèches (76) de la chambre de mélange (34), et l'organe d'acheminement (54) et l'organe de mélange (82) étant des organes distincts,
l'installation comportant un dispositif de fourniture des matières liquides (39) adapté pour introduire les matières liquides dans les matières sèches, le dispositif de fourniture des matières liquides (39) comportant un dispositif d'introduction (42) d'un premier composant liquide, notamment le dispositif de fourniture des matières liquides (39) comportant en outre un dispositif d'introduction (44) d'un second composant liquide,
l'installation comprenant une tête de projection (94) adaptée pour projeter le mortier, la tête de projection (94) ayant une entrée de tête, dans laquelle débouche la sortie de mortier (80), et au moins une fenêtre de projection (98) du mortier, **caractérisée en ce que** le ou chaque dispositif d'introduction de composant liquide est adapté pour introduire le composant liquide concerné dans les matières sèches selon une direction ayant une composante perpendiculaire au sens de transport (T) des matières sèches ou selon une direction perpendiculaire à ce sens de transport (T), **en ce que** le ou chaque dispositif d'introduction de composant de liquide (42, 44) comporte un canal d'introduction (100, 108) débouchant dans la chambre de mélange (74) au niveau de l'entrée des matières liquides (78) et traversant la paroi du carter (72).

2. Installation selon la revendication 1, dans laquelle l'organe d'acheminement (54) définit un axe (A2) et l'organe de mélange (82) définit un axe (B2) et dans laquelle l'organe d'acheminement (54) et l'organe de mélange (82) sont axialement espacés l'un de l'autre en formant un écart axial (EC).

3. Installation selon la revendication 1 ou 2, dans laquelle l'organe d'acheminement est une vis (56) et/ou l'organe de mélange est une vis (86).

4. Installation selon la revendication 3, dans laquelle l'organe d'acheminement est une vis (56) et l'organe de mélange est une vis (86) et dans laquelle les vis (56, 86) ont des pas de vis (P1, P2) et/ou des diamètres extérieurs (D1, D2) différents.

5. Installation selon l'une quelconque des revendications précédentes, dans laquelle la chambre d'acheminement (48) définit un axe de chambre (A1) et la chambre de mélange (74) définit un axe de chambre (B1) et ces axes de chambre sont disposés coaxialement l'un à l'autre.

6. Installation selon l'une quelconque des revendications précédentes, dans laquelle la chambre d'acheminement (48) et la chambre de mélange (74) ont des sections transversales différentes l'une de l'autre, et notamment dans laquelle la surface de la section transversale de la chambre d'acheminement est plus importante que la surface de la section transversale de la chambre de mélange.

7. Installation selon l'une quelconque des revendications précédentes, comprenant un premier moteur d'entraînement (58) adapté pour entraîner l'organe d'acheminement (54) et comprenant un second moteur d'entraînement (84) adapté pour entraîner l'organe de mélange (82).

8. Installation selon l'une quelconque des revendications précédentes, dans laquelle l'organe d'acheminement (54) a un côté entraînement (62) et un côté libre (64) et l'organe de mélange a un côté entraînement (90) et un côté libre (92) et dans laquelle les deux côtés libres (64, 92) sont adjacents l'un de l'autre, et notamment les deux côtés libres sont dirigés l'un vers l'autre.

9. Installation selon l'une quelconque des revendications précédentes, dans laquelle la ou chaque fenêtre de projection (98) a une forme générale de triangle ou de quadrilatère.

10. Installation selon l'une quelconque des revendications précédentes, dans laquelle le dispositif d'acheminement (32) est un dispositif de mélange qui est adapté pour mélanger au moins un premier composant sec et un deuxième composant sec.

11. Installation selon l'une quelconque des revendications précédentes, le dispositif d'introduction du premier composant liquide et le dispositif d'introduction du second composant liquide étant adaptés pour introduire le premier composant liquide et le second composant liquide séparément l'un de l'autre.

12. Installation selon l'une quelconque des revendications précédentes, dans laquelle l'entrée des matières liquides (78) est disposée en aval de l'entrée des matières sèches (76) dans la chambre de mélange (74).

13. Utilisation d'une installation selon l'une quelconque des revendications précédentes pour revêtir intérieurement un corps de base d'un élément de canalisation avec un revêtement de mortier.

## Patentansprüche

1. Einrichtung, die angepasst ist zum Innen-Beschichten eines Kanalisationselements mit Mörtel, des Typs, der aufweist:
- eine Fördervorrichtung (32), die angepasst ist zum Fördern von Trockenmaterial des Mörtels, wobei die Fördervorrichtung eine Förderkammer (48) und ein Organ zum Fördern (54) des Trockenmaterials aufweist, das in der Förderkammer angeordnet ist, wobei die Förderkammer (48) mit einem Trockenmaterial-Einlass (50) und einem Trockenmaterial-Auslass (52) ausgestattet ist,
- eine Mischvorrichtung (34), die angepasst ist zum Mischen des Trockenmaterials mit Flüssigmaterial, um den Mörtel zu erhalten, wobei diese Mischvorrichtung ein Mischorgan (82) und ein Gehäuse (72) hat, welches eine Kammer zum Mischen (74) des Trockenmaterials mit dem Flüssigmaterial bildet, wobei diese Kammer zum Mischen einen Trockenmaterial-Einlass (76), einen Flüssigmaterial-Einlass (78) und einen Mörtel-Auslass (80) hat,
wobei der Trockenmaterial-Auslass (52) der Fördervorrichtung (32) in dem Trockenmaterial-Einlass (76) der Kammer zum Mischen (34) ausmündet, und wobei das Organ zum Fördern (54) und das Mischorgan (82) unterschiedliche Organe sind,
wobei die Einrichtung eine Vorrichtung zur Zuführung des Flüssigmaterials (39) aufweist, die angepasst ist zum Einbringen des Flüssigmaterials in das Trockenmaterial, wobei die Vorrichtung zur Zuführung des Flüssigmaterials (39) eine Vorrichtung zum Einbringen (42) einer ersten Flüssigkomponente aufweist, wobei die Vorrichtung zur Zuführung des Flüssigmaterials (39) insbesondere ferner eine Vorrichtung zum Einbringen (44) einer zweiten Flüssigkomponente aufweist, wobei die Einrichtung einen Spritzkopf (94) aufweist, der angepasst ist zum Spritzen des Mörtels, wobei der Spritzkopf (94) einen Kopf-Einlass, in welchen der Mörtel-Auslass (80) einmündet, und wenigstens ein Fenster zum Ausspritzen (98) des Mörtels hat,
**dadurch gekennzeichnet, dass** die oder jede Vorrichtung zum Einbringen der Flüssigkomponente angepasst ist zum Einbringen der Flüssigkomponente, die zu dem Trockenmaterial zugeordnet ist, entlang einer Richtung, die eine Komponente senkrecht zur Förderrichtung (T) des Trockenmaterials hat, oder entlang einer Richtung senkrecht zur dieser Förderrichtung (T), und dass die oder jede Vorrichtung zum Einbringen der Flüssigkomponente (42, 44) einen Einbringkanal (100, 108) aufweist, der in der Mischkammer (74) ausmündet auf Höhe des Flüssigmaterial-Einlasses (78) und der die Gehäusewand (72) durchdringt.

2. Einrichtung gemäß Anspruch 1, wobei das Organ zum Fördern (54) eine Achse (A2) definiert und das Mischorgan (82) eine Achse (B2) definiert, und wobei das Organ zum Fördern (54) und das Mischorgan (82) axial im Abstand voneinander sind unter Ausbildung eines Axialabstands (EC).

3. Einrichtung gemäß Anspruch 1 oder 2, wobei das Organ zum Fördern eine Schnecke (56) ist und/oder wobei das Mischorgan eine Schnecke (86) ist.

4. Einrichtung gemäß Anspruch 3, wobei das Organ zum Fördern eine Schnecke (56) ist und das Mischorgan eine Schnecke (86) ist, und wobei die Schnecken (56, 86) unterschiedliche Windungssteigungen und/oder unterschiedliche Außendurchmesser (D1, D2) haben.

5. Einrichtung gemäß irgendeinem der vorhergehenden Ansprüche, wobei die Förderkammer (48) eine Kammerachse (A1) definiert und wobei die Kammer zum Mischen (74) eine Kammerachse (B) definiert, und wobei diese Kammerachsen zueinander koaxial angeordnet sind.

6. Einrichtung gemäß irgendeinem der vorhergehenden Ansprüche, wobei die Förderkammer (48) und die Kammer zum Mischen (74) voneinander verschiedene Querschnitte haben, und wobei insbesondere die Fläche des Querschnitts der Förderkammer größer ist als die Fläche des Querschnitts der Kammer zum Mischen (74).

7. Einrichtung gemäß irgendeinem der vorhergehenden Ansprüche, aufweisend einen ersten Antriebsmotor (58), der angepasst ist zum Antreiben des Organs zum Fördern (54), und aufweisend einen zweiten Antriebsmotor (84), der angepasst ist zum Antreiben des Mischorgans (82).

8. Einrichtung gemäß irgendeinem der vorhergehenden Ansprüche, wobei das Organ zum Fördern (54) eine Antriebsseite (62) und eine freie Seite (64) hat und das Organ zum Mischen eine Antriebsseite (90) und eine freie Seite (92) hat, und wobei die beiden freien Seiten (64, 92) zueinander benachbart sind, und wobei insbesondere die beiden freien Seiten zueinander hin gewandt sind.

9. Einrichtung gemäß irgendeinem der vorhergehenden Ansprüche, wobei das oder jedes Fenster zum Ausspritzen (98) eine im Wesentlichen dreieckige oder viereckige Form hat.

10. Einrichtung gemäß irgendeinem der vorhergehenden Ansprüche, wobei die Fördervorrichtung (32) eine Mischvorrichtung ist, welche angepasst ist zum Mischen wenigstens einer ersten Trockenkomponente und einer zweiten Trockenkomponente.

11. Einrichtung gemäß irgendeinem der vorhergehenden Ansprüche, wobei die Vorrichtung zum Einbringen der ersten Flüssigkomponente und die Vorrichtung zum Einbringen der zweiten Flüssigkomponente angepasst sind zum voneinander separaten Einbringen der ersten Flüssigkomponente und der zweiten Flüssigkomponenten.

12. Einrichtung gemäß irgendeinem der vorhergehenden Ansprüche, wobei der Flüssigmaterial-Eintritt (78) nach dem Trockenmaterial-Eintritt (76) in der Kammer zum Mischen (74) angeordnet ist.

13. Verwendung einer Einrichtung gemäß irgendeinem der vorhergehenden Ansprüche zum Innen-Beschichten eines Basiskörpers eines Kanalisationselements mit einer Mörtel-Beschichtung.

## Claims

1. A facility adapted for coating the inside of a pipe element using a mortar, comprising
- a transport device (32) which is suitable for transporting the dry matter of the mortar, the transport device including a transport chamber (48) and a member (54) for transporting the dry matter, arranged in the transport chamber, the transport chamber (48) being provided with a dry matter inlet (50) and a dry matter outlet (52)
- a mixing device (34) suitable for mixing the dry matter with liquid matter in order to obtain the mortar, said mixing device having a mixing member (82) and a housing 72 forming a mixing chamber (74) for mixing the dry matter with the liquid matter, the mixing chamber having a dry matter inlet (76), a liquid matter inlet (78) and a mortar outlet (80),
the dry matter outlet (52) of the transport device (32) leads into the dry matter inlet (76) of the mixing chamber (34), and the transport member (54) and the mixing member (82) are separate members,
the facility including a device for supplying liquid matter (39) suitable for introducing the liquid matter into the dry matter, in particular the device for supplying liquid matter (39) including a device (42) for introducing a first liquid component, in particular the device for supplying liquid matter (39) including furthermore a device (44) for introducing a second liquid component,
the facility comprising a projection head (94) adapted to project the mortar, the projection head (94) having a head inlet, in which the mortar outlet (80) emerges, and at least one projection window (98) for the mortar,
**characterized in that** the or each device for introducing the liquid component being adapted to introduce the concerned liquid component into the dry matter in a direction having a component perpendicular to the transport direction (T) of the dry matter or in a direction perpendicular to that transport direction (T),
**in that** the or each device (42, 44) for introducing a liquid component comprises an introduction canal (100, 108) leading into the mixing chamber (74) at the liquid matter inlet (78) and passing through the wall of the housing (72).

2. The facility according to claim 1, wherein the transport member (54) defines an axis (A2) and the mixing member (82) defines an axis (B2), and the transport member (54) and the mixing member (82) are axially spaced apart from one another and form an axial gap (EC).

3. The facility according to claim 1 or 2, wherein the transport member is a screw (56) and/or the mixing member is a screw (86).

4. The facility according to claim 3, wherein the transport member is a screw (56) and the mixing member is a screw (86), and wherein the screws (56, 86) have different screw pitches (P1, P2) and/or outside diameters (D1, D2).

5. The facility according to any one of the preceding claims, wherein the transport chamber (48) defines a chamber axis (A1) and the mixing chamber (74) defines a chamber axis (B1), and said chamber axes are arranged coaxially to one another.

6. The facility according to any one of the preceding claims, wherein the transport chamber (48) and the mixing chamber (74) have different transverse cross-sections, and in particular wherein the surface area of the transverse cross-section of the transport chamber is larger than the surface area of the transverse cross-section of the mixing chamber.

7. The facility according to any one of the preceding claims, comprising a first drive motor (58) suitable for driving the transport member (54) and a second drive motor (84) suitable for driving the mixing member (82).

8. The facility according to any one of the preceding claims, wherein the transport member (54) has a driving side (62) and a free side (64), and the mixing member has a driving side (90) and a free side (92), and wherein the two free sides (64, 92) are adjacent to one another, and in particular the two free sides are oriented toward one another.

9. The facility according to any one of the preceding claims, wherein the or each projection window (98) is generally in the shape of a triangle or quadrilateral.

10. The facility according to any one of the preceding claims, wherein the transport device (32) is a mixing device that is suitable for mixing at least a first dry component and a second dry component.

11. The facility according to any one of the preceding claims, the device for introducing the first liquid component and the device for introducing the second liquid component being adapted to introduce the first liquid component and the second liquid component separately from one another.

12. The facility according to any one of the preceding claims, wherein the liquid matter inlet (78) is located downstream the dry matter inlet (76) in the mixing chamber (74).

13. A use of a facility according to any one of the preceding claims to coat the inside of the basic body of a canalization element with a mortar lining.
